# EUROPEAN PATENT APPLICATION

(11) **EP 4 827 064 A1**
(43) Date of publication of application: **21.10.2026**
(21) Application number: 24902557.8
(22) Date of filing: 26.11.2024
(51) Int. Cl.: H04L 41/16

(54) **COMMUNICATION METHOD, AND APPARATUS**

(30) Priority: 12.12.2023 CN 202311704622
(71) Applicant: Huawei Technologies Co., Ltd., Shenzhen, Guangdong 518129 (CN)
(72) Inventor: ZENG, Yu, Shenzhen, Guangdong 518129 (CN)
(74) Representative: Huawei European IPR
(86) International application number: PCT/CN2024/134683
(87) International publication number: WO 2025/124135

(57) **Abstract**

A communication method and apparatus. The method includes: a terminal reporting environment information of an environment in which the terminal is currently located to a network device; and the network device determining, based on the environment information reported by the terminal, an AI model that matches the environment information, and indicating the AI model to the terminal. The terminal uses the AI model that matches the current environment to perform model inference, implement corresponding functions, and improve the performance of AI-based UC.

## Description

### CROSS-REFERENCE TO RELATED APPLICATIONS

This application claims priority to Chinese Patent Application No. 202311704622.8, filed with the China National Intellectual Property Administration (hereinafter referred to as the "CNIPA") on December 12, 2023, and entitled "A Communication Method and Apparatus." The entire content of this application is incorporated herein by reference.

### TECHNICAL FIELD

The embodiments of this application relate to the field of communications technologies, and in particular, to a communication method and apparatus.

### BACKGROUND

Currently, for an application case (use case, UC) based on an artificial intelligence (artificial intelligence, AI) model on an air interface, a design in which an AI model is deployed on a terminal side, a network (network, NW) side, and both a terminal side and a NW side is discussed in a standard. For a design in which the AI model is deployed on a terminal side, or the AI model is deployed on both a terminal side and a NW side, the terminal faces a problem of how to select an appropriate AI model from a plurality of AI models implementing the function. Due to mobility of the terminal and changes of the surrounding environment, the environment of the terminal is timevarying. How to determine the AI model matching the environment of the terminal is a research direction.

### SUMMARY

Embodiments of this application provide a communication method and apparatus, so that a terminal can determine an AI model matching an environment.

According to a first aspect, a communication method is provided, where the method is applied to a terminal, the method is performed by a terminal, or a module (for example, a chip or a circuit) in the terminal, and includes: sending a first message to a network device, where the first message includes first indication information; and the first indication information is used to indicate first environment information of the terminal; and receivinga second message from the network device, wherein the second message comprises second indication information, and the second indication information is used to indicate the first artificial intelligence AI model corresponding to the first environment information. Optionally, the network device may be an access network device, a core network element, an operation, administration, and maintenance OAM, another AI node, or the like.

Through the above design, the terminal reports environment information of the current environment in which the terminal is located to the network device. The network device determines, based on the environment information reported by the terminal, an AI model that matches the environment information, and indicates the AI model to the terminal. The terminal uses the AI model that matches the current environment to perform model inference, implement corresponding functions, and improve the performance of the AI-based UC.

In a possible design, the sending a first message to a network device includes: receiving a third message from the network device, where the third message includes first configuration information, and the first configuration information is used to configure the terminal to report the environment information to the network device; and sending the first message to the network device according to the first configuration information.

In a possible design, the second message further includes third indication information and/or fourth indication information, where the third indication information is used to indicate a condition for enabling the first AI model, and the fourth indication information is used to indicate an obtaining manner of the first AI model.

In a possible design, before the sending a first message to a network device, the method further includes: sending a fourth message to the network device, where the fourth message includes at least one of the following: fifth indication information, sixth indication information, seventh indication information, eighth indication information, or ninth indication information. The fifth indication information is used to indicate a type and content of environment information reported by the terminal. The sixth indication information is used to indicate a correspondence between the environment information and the identifier. The seventh indication information is used to indicate a storage capability of the terminal. The eighth indication information is used to indicate a performance requirement of an AI model for the environment information in different environments. The ninth indication information is used to indicate a capability of the terminal to obtain an AI model.

Through the above design, taking as an example the correspondence between environment information and identifiers that the network device and the terminal have previously interacted with, subsequently, when the terminal reports the first environment information to the access network device, the terminal directly reports the identifier corresponding to the type of the first environment information to the access network device, and does not need to report the type of the first environment information reported to the access network device again. In this way, air interface overheads are saved.

Aspect 2 is a method corresponding to Aspect 1. For beneficial effects, refer to the description of Aspect 1. The method provides a communication method, which is applied to an access network device. The execution body of the method is the access network device, or it is applied to a module (for example, a chip or a circuit) in the access network device. The method includes:
In a possible design, the method further includes: sending a third message to the terminal, where the third message includes first configuration information, and the first configuration information is used to configure the terminal to report environment information to the network device.

In a possible design, the second message further includes third indication information and/or fourth indication information, where the third indication information is used to indicate a condition for enabling the first AI model, and the fourth indication information is used to indicate an obtaining manner of the first AI model.

In a possible design, before the receiving a first message from a terminal, the method further includes: receiving a fourth message from the terminal, where the fourth message includes at least one of the following: fifth indication information, sixth indication information, seventh indication information, eighth indication information, or ninth indication information. The fifth indication information is used to indicate a type and content of environment information reported by the terminal. The sixth indication information is used to indicate a correspondence between the environment information and an identifier. The seventh indication information is used to indicate a storage capability of the terminal. The eighth indication information is used to indicate a performance requirement of an AI model for the terminal in different environment information. The ninth indication information is used to indicate a capability of the terminal to obtain an AI model.

According to the third aspect, a communication method is provided. An execution body of the method is a terminal, or a module applied to the terminal. The method includes: receiving a fifth message from a network device, where the fifth message includes tenth indication information, and the tenth indication information is used to indicate second environment information of the network device; and determining a second artificial intelligence AI model based on the second environment information.

Through the above design, the access network device provides the terminal with environment information that the access network device can obtain. The terminal makes a comprehensive decision based on the environment information provided by the access network device and the environment information it can obtain itself, and determines the second AI model that matches the terminal environment. This avoids a decline in inference performance caused by a mismatch between the terminal environment and the AI model, thereby improving the performance of AI-based UC.

In a possible design, after the second AI model is determined, the method further includes: sending a sixth message to the network device, where the sixth message includes eleventh indication information, and the eleventh indication information is used to indicate the second AI model.

In a possible design, the sixth message further includes: twelfth indication information and/or thirteenth indication information, where the twelfth indication information is used to indicate a first condition for the terminal to start the second AI model, and the thirteenth indication information is used to indicate a first manner in which the terminal obtains the second AI model.

In a possible design, the method further includes: receiving a seventh message from the network device, where the seventh message includes at least one of the following: fourteenth indication information, fifteenth indication information, or sixteenth indication information. The fourteenth indication information is used to indicate a third AI model, where the third AI model and the second AI model implement the same function. The fifteenth indication information is used to indicate a second manner in which the terminal obtains the second AI model. The sixteenth indication information is used to indicate a second condition for the terminal to start the second AI model.

In a possible design, the method further includes: receiving an eighth message from the network device, where the eighth message includes at least one of the following: seventeenth indication information, eighteenth indication information, nineteenth indication information, or twentieth indication information. The seventeenth indication information is used to indicate an identifier of an AI model that can be provided by the network device under different environment information. The eighteenth indication information is used to indicate a transmission manner supported when the network device transmits the AI model to the terminal. The nineteenth indication information is used to indicate a type and content of the environment information. The twentieth indication information is used to indicate a mapping relationship between the environment information and the identifier.

Fourth aspect. This is a peer method corresponding to the third aspect. Beneficial effects may refer to the description of the third aspect. A communication method is provided, where the method is applied to an access network device, and the method is performed by the access network device, or is applied to a module in the access network device. The method includes: obtaining second environment information of a network device; and sending a fifth message to a terminal, where the fifth message includes tenth indication information, and the tenth indication information is used to indicate the second environment information.

In a possible design, the method further includes: receiving a sixth message from the terminal, where the sixth message includes eleventh indication information, and the eleventh indication information is used to indicate a second artificial intelligence AI model, where the second AI model is determined based on the second environment information.

In a possible design, the sixth message further includes: twelfth indication information, and/or thirteenth indication information, where the twelfth indication information is used to indicate a first condition for the terminal to start the second AI model, and the thirteenth indication information is used to indicate a first manner for the terminal to obtain the second AI model.

In a possible design, the method further includes: sending a seventh message to the terminal, where the seventh message includes at least one of the following: fourteenth indication information, fifteenth indication information, or sixteenth indication information. The fourteenth indication information is used to indicate a third AI model, where the third AI model and the second AI model implement the same function. The fifteenth indication information is used to indicate a second manner in which the terminal obtains the second AI model. The sixteenth indication information is used to indicate a second condition for the terminal to start the second AI model.

In a possible design, the method further includes: sending an eighth message to the terminal, where the eighth message includes at least one of the following: seventeenth indication information, eighteenth indication information, nineteenth indication information, or twentieth indication information. The seventeenth indication information is used to indicate an identifier of an AI model that the network device can provide under different environment information. The eighteenth indication information is used to indicate a transmission manner supported when the network device transmits the AI model to the terminal. The nineteenth indication information is used to indicate a type and content of the environment information. The twentieth indication information is used to indicate a mapping relationship between the environment information and the identifier.

According to a fifth aspect, an apparatus is provided. The apparatus can implement the method in the first aspect or the third aspect. For example, the apparatus includes a means (means) corresponding to the first aspect or the third aspect. The apparatus may be implemented by hardware, software, or hardware executing corresponding software.

In a possible design, the apparatus includes a unit for performing the first aspect or the third aspect.

In a possible design, the apparatus includes a processor, and the processor is configured to perform the method in the first aspect or the third aspect.

In a possible design, the apparatus includes a processor and an interface circuit. The interface circuit is configured to receive a signal from another apparatus other than the apparatus and transmit the signal to the processor, or send the signal from the processor to another apparatus other than the apparatus. The processor is configured to implement the method in the first aspect or the third aspect by using a logic circuit or an executable code instruction.

In a possible design, the apparatus includes a processor and a memory. The processor is configured to execute the computer program or instruction stored in the memory, so that the apparatus implements the method in the first aspect or the third aspect.

Optionally, the apparatus may be a first apparatus, or may be a module or unit (for example, a chip, a chip system, or a circuit) that is in the first apparatus and that is in a one-to-one correspondence with the method/operation/step/action described in the first aspect or the third aspect). Alternatively, it may be capable of being used in a manner matching the first apparatus.

According to a sixth aspect, an apparatus is provided. The apparatus can implement the method in the second aspect or the fourth aspect. For example, the apparatus includes means (means) for performing the method corresponding to the second aspect or the fourth aspect. The apparatus may be implemented by hardware, software, or hardware executing corresponding software.

In a possible design, the apparatus includes a unit for performing the method in the second aspect or the fourth aspect.

In a possible design, the apparatus includes a processor, and the processor is configured to perform the method in the second aspect or the fourth aspect.

In a possible design, the apparatus includes a processor and an interface circuit. The interface circuit is configured to receive a signal from another apparatus outside the apparatus and transmit the signal to the processor, or send a signal from the processor to another apparatus outside the apparatus. The processor is configured to implement the method in the second aspect or the fourth aspect by using a logic circuit or executing code instructions.

In a possible design, the apparatus includes a processor and a memory. The processor is configured to execute the computer program or instructions stored in the memory, so that the apparatus implements the method in the second aspect or the fourth aspect.

Optionally, the apparatus may be a second apparatus, or may be a module or unit (for example, a chip, a chip system, or a circuit) that is in the second apparatus and that is corresponding to the method/operation/step/action described in the second aspect or the fourth aspect and that can be executed by the second apparatus.

According to the seventh aspect, a computer-readable storage medium is provided. The computer-readable storage medium stores a computer program or instructions. When the computer program or instructions are run on a computer, the computer is enabled to implement the method in any one of the first aspect to the fourth aspect.

According to the eighth aspect, a computer program product is provided. The computer program product includes a computer program or instructions. When the computer program or instructions are run on a computer, the method in any one of the first aspect to the fourth aspect is executed.

According to the ninth aspect, a chip is provided, including a processor. The processor is coupled to a memory and is configured to execute a computer program or instructions stored in the memory, so that the chip implements the method in any one of the first aspect to the fourth aspect.

According to the tenth aspect, a communications system is provided, including: a first communications apparatus and a second communications apparatus. The first communications apparatus is configured to implement the method in the first aspect, and the second communications apparatus is configured to implement the method in the second aspect. Alternatively, the first communications apparatus is configured to implement the method in the third aspect, and the second communications apparatus is configured to implement the method in the fourth aspect.

### BRIEF DESCRIPTION OF DRAWINGS

FIG. 1 is a schematic diagram of an architecture of a communications system according to an embodiment of this application;
FIG. 2 is a schematic diagram of an application architecture of an AI model according to an embodiment of this application;
FIG. 3 is a schematic diagram of a neuron according to an embodiment of this application;
FIG. 4 is a schematic diagram of a neural network according to an embodiment of this application;
FIG. 5 is a schematic diagram of a process of a communication method according to an embodiment of this application;
FIG. 6 is a schematic diagram of another process of a communication method according to an embodiment of this application;
FIG. 7 is a schematic diagram of a structure of an apparatus according to an embodiment of this application.
FIG. 8 is another schematic structural diagram of an apparatus according to an embodiment of this application.

### DESCRIPTION OF EMBODIMENTS

To make the objectives, technical solutions, and advantages of this application clearer, the following further describes this application in detail with reference to the accompanying drawings. The specific operation method, function description, and the like in the method embodiment may also be applied to the apparatus embodiment or the system embodiment.

Various numerical numbers and words such as "first" and "second" in the embodiments of this application are merely distinguished for ease of description, and are not used to limit the scope of the embodiments of this application. The sequence numbers of the foregoing processes do not mean the execution sequence. The execution sequence of the processes should be determined according to the functions and internal logic of the processes.

In the embodiments of this application, unless otherwise specified, the number of nouns represents "singular nouns or plural nouns", that is, "one or more". "At least one" refers to one or more, and "a plurality of" refers to two or more. "and/or" describes an association relationship between associated objects, and indicates that three relationships may exist. For example, A and/or B may indicate a case in which A exists alone, A and B exist simultaneously, and B exists alone, where A and B may be a singular number or a plural number. The character "/" indicates that the associated objects are in the OR relationship. "Including at least one of A, B, or C" may indicate that A is included. include B; includes C; include A and B; include A and C; include B and C; include A, B, and C.

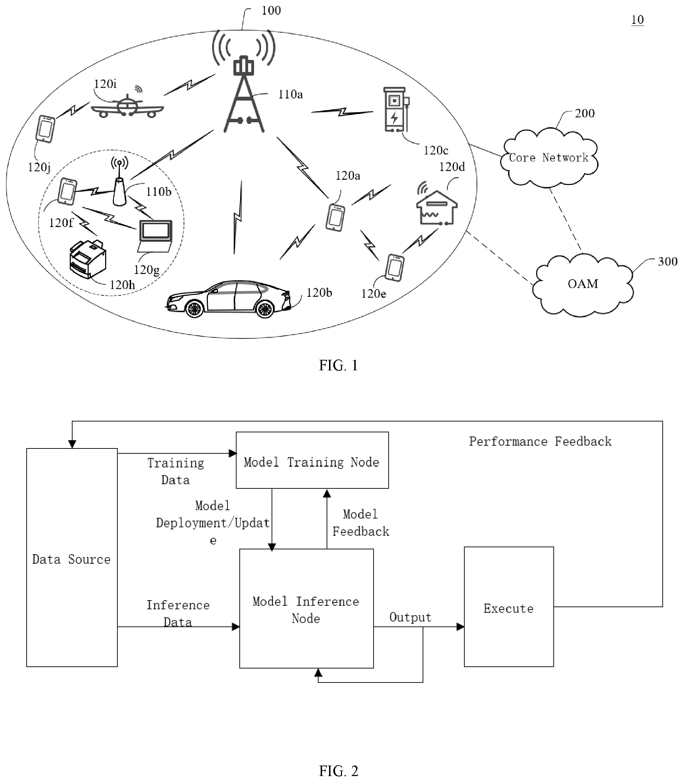

FIG. 1 shows a possible, non-limiting schematic diagram of a system.As shown in FIG. 1, the communication system10 includes a radio access network (radio access network, RAN) 100 and a core network (core network, CN) 200. Optionally, it may further include an operation, administration, and maintenance (operation administration and maintenance, OAM) 300.

### 1. RAN

RAN 100 includes at least one RAN node (for example, 110a and 110b in FIG. 1, which may be collectively referred to as 110)) and at least one terminal (for example, 120a to 120j in FIG. 1, which may becollectively referred to as 120)). RAN 100 may further include other RAN nodes, for example, wireless relay devices and/or wireless backhaul devices (not shown in FIG. 1)).

Terminal 120 may be connected to the RAN node 110 in a wireless manner. The RAN node 110 is connected to the core network 200 in a wireless or wired manner. The core network elements in the core network 200 and the RAN node 110 in the RAN 100 may be different physical devices, or may be the same physical device that integrates the logical functions of the core network elements and the logical functions of the wireless access network.

In the communication system 10, multiple RAN nodes 110 may be nodes of the same type or nodes of different types. In some scenarios, the roles of the RAN node 110 and the terminal 120 are relative. For example, in FIG. 1, the network element 120i may bea helicopter or an unmanned aerial vehicle (UAV), which may be configured as a mobile base station. For those terminals 120j that access the RAN 100 through the network element 120i, the network element 120i is a base station; but for the base station 110a, the network element 120i is a terminal.

RAN 100 may be a cellular system related to the 3rd Generation Partnership Project (3rd generation partnership project, 3GPP), for example, a 4th generation (4th generation, 4G) mobile communication system, a 5th generation (5th generation, 5G) mobile communication system, or a future-oriented evolution system, such as a 6th generation (6th generation, 6G) mobile communication system. RAN 100 may also be an open access network (open RAN, O-RAN, or ORAN), a cloud radio access network (cloud radio access network, CRAN), or a wireless fidelity (wireless fidelity, WiFi) system. RAN 100 may also be a communication system formed by the integration of the above two or more systems.

### 1.1. RAN Node

In a possible scenario, the RAN node may be a base station (base station), an evolved NodeB (evolved NodeB, eNodeB), an access point (access point, AP), ora transmission reception point (transmission reception point, TRP),a next generation NodeB (next generation NodeB, gNB), a next generation NodeB in a 6G mobile communications system, a base station in a future mobile communications system, an access node in a WiFi system, or the like. The RAN node may be a macro base station (110a in FIG. 1), a micro base station or an indoor station (110b in FIG. 1), a relay node or a donor node, or a radio controller in a CRAN scenario. Optionally, the RAN node may alternatively be a server, a wearable device, a vehicle, an in-vehicle device, or the like. For example, an access network device in a vehicle external connection to everything (vehicle to everything, V2X) technology may be a roadside unit (road side unit, RSU). All or some functions of the RAN node in the embodiments of this application may also be implemented by using software functions running on hardware, or implemented by using virtualized functions instantiated on a platform (for example, a cloud platform). The RAN node in the embodiments of this application may alternatively be a logical node, a logical module, or software that can implement all or some functions of the RAN node.

In another possible scenario, multiple RAN nodes collaborate to assist a terminal in achieving wireless access. Different RAN nodes respectively implement some functions of a base station. For example, a RAN node may be a centralized unit (central unit, CU), a distributed unit (distributed unit, DU)), a CU-control plane (control plane, CP), a CU-user plane (user plane, UP), or a radio unit (radio unit, RU), etc. The CU and DU may be separately disposed, or may also be included in the same network element, for example, in a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). <t1>

In different systems, the CU (or CU-CP and CU-UP), DU, or RU may also have different names. However, a person skilled in the art can understand their meanings. For example, in the ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, in this application, the CU, the CU-CP, the CU-UP, the DU, and the RU are used as examples for description. Any one of the CU (or the CU-CP, the CU-UP), the DU, and the RU) in this application may be implemented by using a software module, a hardware module, or a combination of a software module and a hardware module.

A RAN node, sometimes also referred to as an access network device, a RAN entity, or an access node, etc., constitutes a part of the communication system and is used to help the terminal achieve wireless access. In subsequent descriptions of this application, unless otherwise specified, "access network device" is used for description.

It may be understood that the access network device may be referred to as a communications apparatus. For example, the access network device may be understood as an apparatus having an access network device function. For example, the apparatus used to implement a function of the access network device may be an access network device. or some elements in the access network device, for example, a CU or a DU. Alternatively, the apparatus may be an apparatus that can support the access network device in implementing the function, for example, a chip system, a hardware circuit, a software module, or a hardware circuit plus a software module. The apparatus may be installed in the access network device or may be used in matching with the access network device. In this embodiment of this application, the chip system may include a chip, or may include a chip and another discrete component.

### 1.2. Terminal

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), and the Internet of Things (internet of things). IoT), virtual reality (virtual reality, VR), augmented reality (augmented reality, AR), industrial control, autonomous driving, telemedicine, smart grid, smart furniture, smart office, smart wearable, smart transportation, smart city, and the like. The terminal may be a mobile phone, a head-mounted display device, a tablet computer, a computer with a wireless transceiver function, a wearable device, a vehicle, an unmanned aerial vehicle, a helicopter, an airplane, a ship, a robot, a robotic arm, a smart home device, or the like. A device form of the terminal is not limited in this embodiment of this application.

It can be understood that a terminal may be referred to as a communication apparatus. For example, the terminal may be understood as an apparatus with terminal functions. For example, an apparatus used to implement the functions of a terminal device may be the terminal device; or may be an apparatus that can support the terminal device in implementing the functions, such as a chip system, a hardware circuit, a software module, or a hardware circuit plus a software module. The apparatus may be installed in the terminal device or may be used in a matching manner with the terminal device.

### 2. CN

CN200 includes at least one core network element. Taking a 5G communication system as an example, CN200 includes an access and mobility management function (access and mobility management function, AMF) element, a session management function (session management function, SMF) element, a user plane function (user plane function, UPF) element, a policy control function (policy control function, PCF) element, a unified data management (unified data management, UDM) element, and an application function (application function, AF) element, etc.

It can be understood that a core network element may be referred to as a communications apparatus. For example, the core network element may be understood as an apparatus having core network functions. For example, an apparatus used to implement the functions of the core network element may be the core network element; or may be an apparatus that can support the core network element in implementing the functions, such as a chip system, a hardware circuit, a software module, or a hardware circuit plus a software module. The apparatus may be installed in the core network element or may be used in a matching manner with the core network element.

### 3. OAM

OAM can also be referred to as network management. OAM is used to operate, manage, and maintain access network devices (the network management of access network devices) and/or to operate, manage, and maintain core network elements (the network management of core network elements). The OAM of the access network device and the OAM of the core network element may be the same or different, and there is no limitation. For example, in the communications system shown in FIG. 1, the first OAM and the second OAM are included. The first OAM is the network management of the access network device, and the second OAM is the network management of the core network element.

It can be understood that OAM may be referred to as a communication apparatus. For example, OAM may be understood as an apparatus with OAM functions, etc. For example, an apparatus used to implement OAM functions may be OAM; or may be an apparatus that can support OAM in implementing the functions, such as a chip system, a hardware circuit, a software module, or a hardware circuit plus a software module. The apparatus may be installed in OAM or may be used in a matching manner with OAM.

To support artificial intelligence (artificial intelligence, AI) in a wireless network, an independent network element is introduced in the communications system 10 shown in FIG. 1, and is referred to as an AI network element (or an AI node), or the like, to implement AI-related operations. The AI network element may be directly connected to an access network device in the communications system 10, or may be connected to the access network device through a third-party network element and the access network device. The third-party network element may be a core network element such as an AMF, a UPF, or the like. Alternatively, in at least one of the terminal, the access network device, the core network element, or the OAM shown in FIG. 1, an AI module or an AI entity is built in, and is used to implement AI-related operations. In this case, the network element that performs AI-related operations is referred to as a network element with a built-in AI function.

For example, an AI model may be deployed inside at least one of the terminal, the access network device, the core network element, the OAM, and the like, and a corresponding function is implemented by using the AI model. AI models deployed on different nodes can be the same or different. Different models may mean different at least one of the following: different structural parameters of models, for example, different layers and/or different weights of models; the input parametersof the model are different. Or the output parameters of the model are different. Optionally, further, functions of the access network device may be split into a CU and a DU. AI models can be deployed in the CU and/or DU.

For example, the CU and the DU may be understood as division of the access network device from a perspective of logical functions. The CU and the DU may be physically separated, deployed together, or the like. This is not limited. A plurality of DUs may be connected to (share) one CU, and one DU may also be connected to a plurality of CUs. Physically, multiple CUs may be centrally disposed or separated. The CU and the DU may be connected by using an interface. For example, the interface may be an F1 interface. The CU and the DU may be divided according to a protocol layer of a wireless network. For example, a packet data convergence protocol (packet data convergence protocol, PDCP) layer and a protocol layer above the PDCP layer are disposed in the CU. For example, the CU is configured to perform radio resource control (radio resource control). functions of the RRC) layer, the service data adaptation protocol (SDAP) layer, and the PDCP layer. A protocol layer below the PDCP layer is arranged in the DU. For example, the DU is configured to perform functions of a radio link control (radio link control, RLC) layer, a medium access control (media access control, MAC) layer, and a physical (physical) layer.

The foregoing division of the processing functions of the CU and the DU based on the protocol layer is merely an example, and may also be divided in another manner. For example, the CU or the DU may be divided into functions with more protocol layers. For another example, the CU or the DU may be divided into some processing functions with protocol layers. For example, some functions of the RLC layer and a function of a protocol layer above the RLC layer are set in the CU, and a remaining function of the RLC layer and a function of a protocol layer below the RLC layer are set in the DU. Alternatively, functions of the CU or the DU may be further divided based on a service type or another system requirement, for example, division based on a delay. A function whose processing time needs to meet a delay requirement is set in the DU, and a function whose processing time does not need to meet the delay requirement is set in the CU. Alternatively, the CU may have one or more functions of a core network. For example, the CU may be disposed on the network side to facilitate centralized management. The DU may have multiple radio frequency functions, for example, the radio frequency function of the DU is set remotely.

Furthermore, the CU can be split into a CU-CP and a CU-UP. AI models can be deployed in the CU-CP and/or the CU-UP.

For example, the functions of the CU can be further split. For instance, the control plane (control plane, CP) and the user plane (user plane, UP) can be separated, and they can be respectively referred to as a CU control plane (CU-CP) and a CU user plane (CU-UP). Optionally, the CU-CP and the CU-UP can be implemented through different entities and connected through an E1 interface. The CU-CP and the CU-UP can be coupled with the DU to jointly complete the functions of the access network device. The interface between the CU-CP and the DU may be F1-C, and the interface between the CU-UP and the DU may be F1-D.

Furthermore, the CU-CP can be split into multiple CU-CPs. For example, the CU-CP can be split into a CU-CP1 and a CU-CP2. Among them, AI models can be deployed in the CP-CP1 and/or the CU-CP2.

For example, the functions of the CU-CP are further divided, including CU-CP1 and CU-CP2. Among them, CU-CP1 is used to implement the function of radio resource management, and CU-CP2 includes the functions of RRC and PDCP-control plane. For example, CU-CP1 is responsible for functions such as receiving AI models and performing model inference, and generates specific interaction instructions, which are sent by CP-CP2 to the corresponding network element.

It can be understood that, when an AI model is deployed in a terminal, an access network device, a core network element, OAM, or the like, and when different network elements communicate and transmit related parameters of the AI model, the current interface may be reused. For example, communication between OAM and an access network device may reuse the current northbound interface. Communication between an access network device and a terminal may reuse the current Uu interface (air interface). Communication between access network devices may reuse the current Xn interface, and so on. When an independent AI network element is introduced, and the AI model is deployed in the AI network element, a communication link between the AI network element and the access network device, the core network device, and the OAM needs to be reestablished.

### [AI Model]

An AI model is a concrete implementation of AI functionality. The AI model represents the mapping relationship between the input and output of the model. The AI model can be a neural network, a linear regression model, a decision tree model, a support vector machine (support vector machine, SVM), a Bayesian network, a Q-learning model, or other machine learning models. The AI functionality can include one or more of the following: data collection (collecting training data and/or inference data)), data preprocessing, model training (model learning), model information release (configuring model information)), model validation, model inference, or releasing inference results, etc.

As shown in FIG. 2, it is a schematic diagram of an application architecture of an AI model. The data source (data source) is used to store training data and inference data. The model training node (model training host) analyzes or trains the training data (training data) provided by the data source, to obtain the AI model, and deploys the AI model in the model inference node (model inference host). Optionally, the model training node may further update the AI model that has been deployed in the model inference node. The model inference node may further provide feedback to the model training node regarding the information of the deployed model, so that the model training node can optimize or update the deployed AI model, etc.

That the AI model is obtained by using the model training node through learning is equivalent to that the model training node obtains, through learning, a mapping relationship between an input and an output of the model by using the training data. The model inference node uses AI models to perform inference based on the inference data provided by the data source and obtain the inference result. The method may also be described as follows: The model inference node inputs the inference data to the AI model, and obtains an output by using the AI model. The output is the inference result. The inference result may indicate configuration parameters used (executed) by the execution object, and/or operations performed by the execution object. The inference result may be uniformly planned by an execution (actor) entity, and sent to one or more execution objects (for example, a network entity) for execution. Optionally, the execution entity or the execution object may feed back a measurement result of a parameter or a measurement quantity collected by the execution entity or the execution object to the data source. This process may be referred to as performance feedback, and the fed-back parameter may be used as training data or inference data. Optionally, feedback information related to model performance may be further determined based on an inference result output by the model inference node, and the feedback information is fed back to the model inference node. The model inference node may feed back the performance information of the model to the model training node based on the feedback information. so that the model training node optimizes or updates the deployed AI model, and the like. This process may be referred to as model feedback.

An AI model can be a neural network or another machine learning model. Taking a neural network as an example, a neural network is a specific implementation form of machine learning technology. According to the universal approximation theorem, a neural network can theoretically approximate any continuous function, thus enabling the neural network to learn any mapping. Therefore, a neural network can accurately abstract and model complex high-dimensional problems.

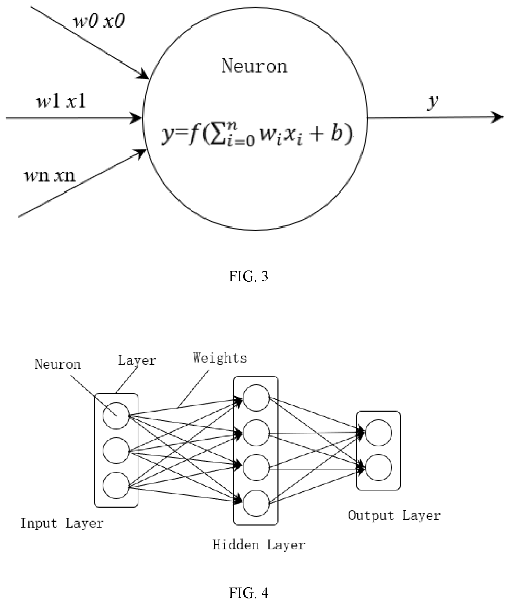

The concept of a neural network originates from the structure of neurons in the brain. Each neuron performs a weighted summation operation on its input values, and then generates an output through an activation function.As shown in FIG. 3, it is a schematic diagram of the neuron structure. Assuming the input of a neuron is, and the corresponding weights for each input are, the bias for the weighted summation is b. The form of the activation function can vary. Assuming the activation function of a neuron is:, the output of the neuron is:. Another example is if the activation function of a neuron is:, the output of the neuron is:.,, and b can take various possible values, such as decimals, integers (including 0, positive integers, or negative integers, etc.), or complex numbers. The activation functions of different neurons in a neural network can be the same or different. $x = \left[{x}_{0},{x}_{1},…,{x}_{n}\right] w = \left[w{, w}_{1},…,{w}_{n}\right] y = f \left(z\right) = max \left(0, z\right) y = f \left({\sum }_{i = 0}^{i = n} {w}_{i} ∗ {x}_{i} + b\right) = max \left(0, {\sum }_{i = 0}^{i = n} {w}_{i} ∗ {x}_{i} + b\right) y = f \left(z\right) = zy = f \left({\sum }_{i = 0}^{i = n} {w}_{i} ∗ {x}_{i} + b\right) = {\sum }_{i = 0}^{i = n} {w}_{i} ∗ {x}_{i} + b {x}_{i} {w}_{i}$

A neural network typically comprises a multi-layer structure, each of which may comprise one or more neurons. Increasing the depth and/or width of the neural network can improve the expression capability of the neural network, and provide more powerful information extraction and abstract modeling capabilities for complex systems. The depth of the neural network may be a quantity of layers included in the neural network, and a quantity of neurons included in each layer may be referred to as a width of the layer. FIG. 4 is a schematic diagram of a layer relationship of a neural network. For example, a neural network includes an input layer and an output layer. The input layer of the neural network processes the received input by the neural network, and transfers the result to the output layer, so that the output layer obtains the output result of the neural network. Alternatively, the neural network includes an input layer, a hidden layer, and an output layer. The input layer of the neural network processes the received input by the neural network, and transfers the result to the middle hidden layer. The hidden layer transfers the calculation result to the output layer or the adjacent hidden layer. Finally, the output layer obtains the output result of the neural network. One neural network may include one or more layers of hidden layers sequentially connected. This is not limited. In a training process of the neural network, a loss function may be defined. The loss function describes a difference or a difference between an output value of the neural network and an ideal target value. A specific form of the loss function is not limited in this embodiment of this application. A neural network training process is a process in which a neural network parameter, for example, a quantity of layers and a width of a neural network, a weight of a neural network, and/or a parameter in an activation function of a neural network, is adjusted, so that a value of a loss function is less than a threshold value or meets a target requirement.

The terminal may implement corresponding functions by using the AI model. For example, when performing model inference, the terminal may select one AI model from multiple AI models that have a same function. Because even AI models that implement the same function in different environments achieve different performance. For example, the AI model 1, the AI model 2, and the AI model 3 can all implement a function of predicting load of the access network device. In a specific environment, accuracy of load prediction of the AI model 1 is 98%, and accuracy of load prediction of the AI model 2 is 95%. The load prediction accuracy of AI model 3 is 90%, etc. How to select, based on the current environment information of the terminal, the AI model matching the current environment of the terminal is a technical problem to be resolved in the embodiments of this application.

Currently, for an AI-based application instance (use case, UC) based on an air interface, it is discussed in a standard that the AI model is deployed on a terminal side, a network (network, NW) side, or both on a terminal side and a NW side. For example, for some functions, the terminal and the NW cooperate to complete the functions. For example, to reduce overheads for feeding back downlink data channel information by the terminal to the access network device, A channel state information (channel state information, CSI) compression model may be deployed on a terminal side. The terminal measures a downlink reference signal, determines a downlink data channel matrix H, and inputs H into the CSI compression model to obtain compressed CSI. The terminal feeds back the compressed CSI to the access network device, a CSI decompression model is deployed on the access network device side, and the access network device inputs the received compressed CSI into the CSI decompression model, to obtain a restored downlink data channel matrix H. The access network device may perform an operation such as precoding on the downlink data based on the recovered downlink data channel matrix H. For a design in which the AI model is deployed on a terminal side, or the AI model is deployed on both a terminal side and a NW side, the terminal faces a problem of how to select an appropriate (for example, optimal) AI model from multiple AI models implementing the function.

In a possible implementation, the network device may indicate to the terminal an identifier of an AI model used by the terminal. Based on the indication of the network device, the terminal selects a corresponding AI model. Due to factors such as the movement of the terminal and changes in the surrounding environment, the environment in which the terminal is located changes in real time. Therefore, it is necessary to dynamically adjust the AI model used by the terminal according to the different environments in which the terminal is located. For the foregoing solution in which the network device indicates to the terminal the AI model used by the terminal, because the network device cannot obtain actual environment information of the terminal at any time, the AI model configured by the network device for the terminal may not match the current environment of the terminal. As a result, the performance of the AI-based UC is affected.

In view of this, embodiments of this application provide a communication method and an apparatus. The method includes: reporting, by a terminal, environment information of an environment in which the terminal is currently located to a network device; and determining, by the network device based on the environment information reported by the terminal, an AI model that matches the environment information, and indicating the AI model to the terminal. The terminal uses the AI model that matches the current environment to perform model inference, implement a corresponding function, and improve the performance of the AI-based UC.

It can be understood that a network device may be a node that has the capability of configuring an AI model for a terminal and that requires the terminal to provide environment information for assistance. The network device may be referred to as NW for short. For example, the network device may be an access network device, a CU in an access network device, a CU-CP in an access network device, a core network element, an OAM, or another third-party node. In the following process description, an example in which the network device is an access network device is used for description. It can be understood that, when the network device is an OAM or a core network element, the network device and the terminal may exchange related messages through a data plane bearer or a non-access stratum (non-access stratum, NAS) message of a control plane. For example, the terminal sends an NAS message to the OAM or the core network element by using the access network device. The NAS message includes the first message in the following description. The OAM or the core network element sends the NAS message to the terminal by using the access network device. The NAS message includes the second message in the following description, and so on.

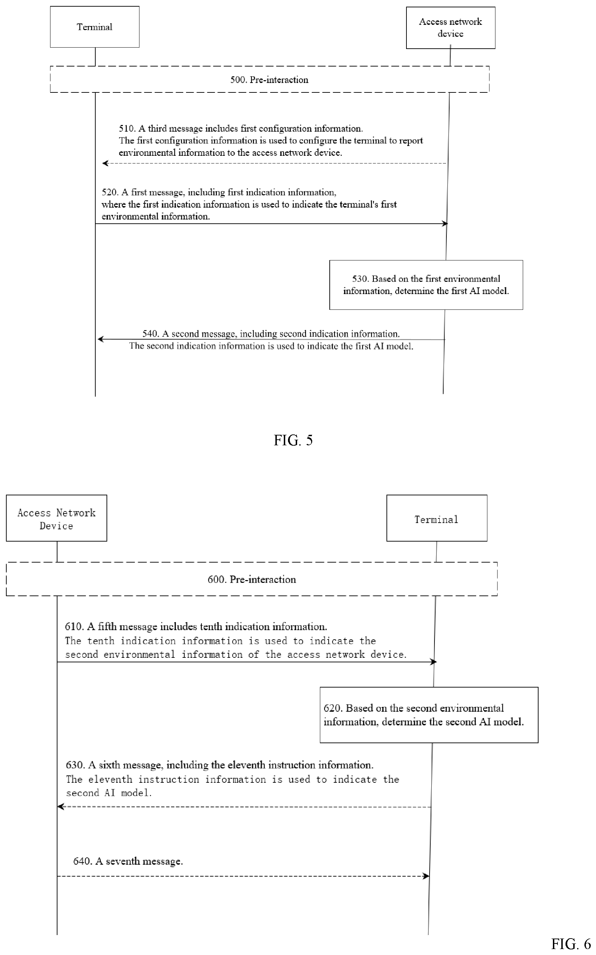

FIG. 5 is a schematic diagram of a process method is provided, including:
Step 510: The access network device sends a third message to the terminal, and the terminal receives the third message from the access network device.

For example, the third message includes first configuration information, and the first configuration information is used to configure the terminal to report environment information to the access network device. For example, the first configuration information is used to configure the terminal to report the type and content of the environment information to the access network device. For example, the environment information includes five types, which are:
1. The macroscopic physical attributes of the terminal.
   For example, the terminal's moving speed, moving direction, geographical location, and altitude, etc.
2. Software and/or hardware attributes of the terminal.
   For example, the valid power of the terminal, computing capability, storage space, and the AI model compilation environment supported by the terminal.
3. The channel environment in which the terminal is located.
   For example, the channel environment in which the terminal is located may be an urban macro environment (urban macro), an urban micro environment (urban micro), or an indoor hotspot (indoor hotspot), etc.
4. Communication configuration between the terminal and the access network device.
   For example, the communication configuration includes a downlink communication configuration and/or an uplink communication configuration. For example, the downlink communication configuration includes a quantity of receive antennas, a quantity of receive ports, and the like of the terminal, a quantity of transmit antennas, a quantity of transmit ports, and the like of the access network device. The uplink communication configuration includes a quantity of transmit antennas, a quantity of transmit ports, and the like of the terminal, a quantity of receive antennas, a quantity of receive ports, and the like of the access network device.
5. A time-frequency domain resource for air interface communication of the terminal.

For example, a carrier frequency, a subcarrier spacing, or bandwidth for communication between the terminal.

The access network device may configure the terminal to report one or more types of environment information in the foregoing five types of environment information. For each type of environment information, the access network device may further configure specific content of environment information reported by the terminal. For example, for one type of environment information, for example, a macrophysical attribute of the terminal, the access network device may configure the environment information reported by the terminal to be specifically a moving speed of the terminal.

For example, the access network device determines the type and content of the environment information reported by the terminal, and configures the type and content for the terminal by using the first configuration information. The terminal reports the environment information to the access network device based on the configuration. In a possible implementation, the terminal and the access network device may exchange, in advance, a type and content of the environment information reported by the terminal. One type of environment information may be referred to as a combination of environment information. For example, an environment information combination includes a moving speed (belonging to a macrophysical attribute of the terminal), a channel environment to which the terminal belongs, and a carrier frequency for terminal communication (belonging to a time-frequency domain resource for terminal communication). The environment information combination is also referred to as an environment information pattern. Further, the terminal and the access network device may further exchange a correspondence between environment information and an identifier. For example, the correspondence between the environment information and the identifier may be one-to-one or one-to-many. This is not limited. For example, the correspondence between environment information and an identifier includes: environment information 1 corresponds to an identifier A, and environment information 2 corresponds to an identifier B. In a possible implementation, the access network device may select one type of environment information from a plurality of types of environment information, and determine an identifier corresponding to the environment information. When the access network device configures the terminal to report the environment information, the access network device may indicate, to the terminal, an identifier corresponding to the environment information. For example, the third message includes the identifier of the environment information. When receiving the third message, the terminal obtains the identifier of the environment information from the third message, and determines, according to the correspondence between the environment information and the identifier, the type, content, and the like of the environment information that needs to be reported. Alternatively, the access network device may directly instruct the terminal to report a type, content, or the like of the environment information. The first configuration information includes a type and content of the environment information that are specifically reported by the terminal. For example, the access network device may instruct the terminal to report a channel environment of the terminal. Alternatively, a type and content of the environment information reported by the terminal are preset, and the terminal reports the environment information in a preset manner. Alternatively, the terminal determines a type and content of the environment information to be reported, and the terminal reports the environment information to the access network device according to the content determined by the terminal. It can be learned that, in addition to the configuration manner of the access network device, the terminal may further report the environment information to the access network device in a preset manner, a manner determined by the terminal, or the like. Therefore, step 510 is optional.

Optionally, the first configuration information is further used to configure a manner in which the terminal reports environment information to the access network device. For example, the terminal is configured to periodically report environment information to the access network device, or report environment information to the access network device based on a condition-triggered event. Different environment information corresponds to different trigger conditions. For example, a speed threshold may be configured. When the moving speed of the terminal is greater than or equal to the speed threshold, the terminal is triggered to report environment information. Alternatively, when the detected environment information changes relative to the last reported environment information, the terminal is triggered to report the next environment information. For example, the terminal may perform reporting of environment information for the first time according to the configuration of the access network device. When the detected environment information changes relative to the first reported environment information, the terminal is triggered to report the environment information for the second time. Similarly, when the detected environment information changes relative to the second reported environment information, the terminal is triggered to report the environment information for the third time.

Step 520: The terminal sends the first message to the access network device, and the access network device receives the first message from the terminal.

The first message includes first indication information, and the first indication information is used to indicate the first environment information of the terminal. For example, in a manner in which the access network device configures the terminal to report the environment information by using the first configuration information, the terminal reports the environment information to the access network device based on the configuration of the access network device. For example, the terminal sends the first message to the access network device based on the first configuration information. For example, the terminal reports the first environment information to the access network device when the reporting period expires or the trigger condition is met based on the configuration of the access network device.

It may be understood that the first environment information may be determined based on an environment in which the terminal is located in real time. For example, when the reporting period expires or the trigger condition is met, the terminal may detect, in real time, an environment in which the terminal is located. generating the first environment information based on the environment in which the terminal is located. Alternatively, the first environment information may be environment information of the terminal within a period of time. For example, the access network device may further configure the terminal to report environment information for a period of time, for example, configure the terminal by using the first configuration information. Specifically, the method may include: a start time of a period of time, duration of a period of time, and the like. The terminal continuously detects the environment in a period of time based on the configuration, and generates environment information (namely, the first environment information) in a period of time. When the reporting period expires or the triggering conditions are met, the environment information within a period of time is reported.

Optionally, the first environment information may be environment information of a certain cell or a certain beam. For example, the access network device may configure the terminal to report the environment information of at least one cell or at least one beam. For example, the first configuration information is used for configuration. For example, the first environment information reported by the terminal may be expressed as: cell 1 - environment information 1 corresponding to identifier A.

For example, in a solution in which the terminal reports the first environment information to the access network device according to the configuration of the access network device, the terminal, in addition to reporting, to the access network device, the type and content of the environment information configured by the access network device, also reports other environment information to the access network device. For example, the access network device and the terminal have preinteracted with a type of environment information, including the type and content of the environment information. The access network device instructs the terminal to report the environment information of the above type. The environment information of the above type does not include the terminal's moving speed, the channel environment in which the terminal is located, and the like. In addition to reporting the type and content of the environment information of the above type, the terminal also reports, to the access network device, that the terminal's moving speed is high speed, and the channel environment in which the terminal is located is an indoor hotspot, and the like. Optionally, the terminal considers that the environment information such as "high speed and indoor hotspot" reported by the terminal has an impact on whether the access network device configures the AI model for the terminal.

Further, if the manner and/or the capability of obtaining the AI model by the terminal is updated, the terminal reports the updated obtaining manner and/or the capability to the access network device. It may be understood that information such as "an updated obtaining manner and/or capability of the terminal" is reported to the access network device by using the first message, or the terminal creates a new message and reports information such as "an updated obtaining manner and/or capability of the terminal" by using the newly created message.

Step 530: The access network device determines a first AI model based on the first environment information.

The AI model may be referred to as a model for short. In a possible implementation, the access network device may obtain a correspondence between environment information and an AI model. The correspondence may also be referred to as an association relationship, a mapping relationship, or the like. The access network device may query, in the correspondence between the environment information and the AI model, the AI model corresponding to the first environment information, where the AI model corresponding to the first environment information is referred to as the first AI model.

For example, the access network device may instruct the terminal to detect an AI model corresponding to each piece of environment information. reporting, by the terminal, the correspondence between the environment information obtained by means of detection and the AI model to the access network device. A correspondence between storage environment information of an access network device and an AI model. For example, when the terminal is in an environment, environment information corresponding to the environment is referred to as environment information 1. AI models 1 through 3 perform the same function. The terminal collects inference data in the current environment. The inference data is sequentially input to the AI model 1 to the AI model 3, and three results are obtained based on outputs of the AI model 1 to the AI model 3. Measure the gap or difference between the three results and the ideal target result, where the gap or difference is referred to as a measurement result. The AI model corresponding to the minimum measurement result is referred to as the AI model corresponding to the current environment information 1. In this case, one piece of environment information is corresponding to one AI model, and the AI model may be referred to as an optimal AI model corresponding to the environment information. Alternatively, an AI model whose measurement result is less than or equal to the threshold is referred to as the AI model corresponding to the current environment information 1. In this case, one piece of environment information may correspond to a plurality of AI models.

It may be understood that, in the correspondence between environment information and an AI model, one piece of environment information may be corresponding to one AI model or multiple AI models. The first environment information reported by the terminal may be corresponding to one AI model or multiple AI models. The first AI model may include one or more AI models. In a possible implementation, the second indication information sent by the access network device to the terminal is used to indicate an AI model list, and the AI model list includes the first AI model. When the first AI model includes one AI model, the AI model list includes one AI model. When the first AI model includes a plurality of AI models, the AI model list includes a plurality of AI models.

In another possible implementation, when the access network device receives the first environment information reported by the terminal, the access network device determines the first environment of the terminal based on the first environment information. For example, an environment of the terminal may be classified as follows: high-speed outdoors and low-speed indoors. There is a correspondence between the terminal environment and the AI model. For example, high-speed outdoors corresponds to AI model X, and low-speed indoors corresponds to AI model Y. The access network device determines, based on the correspondence between the environment of the terminal and the AI model, the AI model corresponding to the first environment, which is referred to as the first AI model. For example, the access network device may instruct the terminal to detect correspondences between different environments and AI models. For a process in which the terminal detects the correspondence between different environments and the AI model, refer to the correspondence between the terminal detects different environment information and the AI model. The terminal reports the detected correspondence between different environments and AI models to the access network device, and the access network device stores the correspondence between different environments and AI models.

Optionally, when determining the first AI model, the access network device may consider not only the first environment information reported by the terminal, but also the environment information of the access network device. In a possible implementation, the access network device may determine the first AI model based on the first environment information and the environment information of the access network device. For example, the access network device determines one or more AI models based on the first environment information. Further, the access network device selects, from the one or more AI models, one or more AIs that match the environment information of the access network device. The one or more AI models are referred to as the first AI model. The same principle as that on the terminal side is applied. The access network device determines, through detection, a correspondence between the environment information of the access network device and the AI model. The environment information of the access network device may be information that can be obtained by the access network device and that has an impact on the configuration of the terminal model. For example, the environment information of the access network device may include weighting information of a transmit beam of the access network device, an antenna downtilt angle, a channel environment of the access network device (for example, the access network device is located indoors or outdoors), and the like.

Step 540: The access network device sends a second message to the terminal, and the terminal receives the second message from the access network device.

The second message includes second indication information, and the second indication information is used to indicate the first AI model or a function for executing the first AI model. For example, the first AI model is represented by using an identifier or an index (index). For example, the second message includes an identifier or an index of the first AI model. When the first AI model includes one AI model (For example, the AI model list sent by the access network device to the terminal includes one AI model), and the terminal may perform model inference by usingthe AI model indicated by the access network device, to implement a corresponding function. For example, when collecting inference data, and inputting the inference data into the AI model, the terminal determines the inference result based on an output of the AI model. Alternatively, when the first AI modelincludes a plurality of AI models (For example, the AI model list sent by the access network device to the terminal includes multiple AI models), the terminal may further select an AI model from the plurality of AI models, and perform model inference. For example, the terminal may select an AI model with reference to other information. For example, the terminal may select, from multiple AI models based on the performance requirement information of the current environment for the AI model, one AI model whose performance requirement meets the condition. Alternatively, when the terminal obtains the plurality of AI models from another device, the terminal may select an AI model that occupies a smallest storage space, or the terminal may select an AI model that has a fastest transmission rate, or the like. This is not limited.

Optionally, the second message may further include third indication information and/or fourth indication information. The third indication information is used to indicate a condition for enabling the first AI model. For example, the condition for enabling the first AI model includes time information for starting the first AI model, that is, within a certain time period, the first AI model is enabled. The fourth indication information is used to indicate a manner of obtaining the first AI model. It can be understood that, in this embodiment of this application, when the first AI model is stored in the internal storage of the terminal, the terminal directly uses the first AI model to perform model inference, to implement a corresponding function. Alternatively, the terminal needs to obtain the first AI model from another node. For example, the terminal downloads the first AI model from another node. The another node may be an access network device, a core network element, an OAM, or an AI node that implements an AI function, for example, an over the top (OTT) server. In this case, the access network device may indicate, to the terminal, by using the fourth indication information, a manner of obtaining the first AI model. For example, the access network device may indicate the terminal to obtain the first AI model from the CP/UP of the access network device. Alternatively, the access network device may indicate the terminal to obtain the first AI model from the core network element through the CP/UP of the access network device. Alternatively, the access network device may indicate the terminal to obtain the first AI model from the OAM. Alternatively, the access network device may indicate the terminal to obtain the first AI model from the OTT service. Alternatively, the access network device may indicate the terminal to obtain the first AI model by using a combination of the foregoing multiple manners. Optionally, the access network device may further indicate, to the terminal, a deadline or completion time for obtaining the first AI model by using the second message, for example, by indicating through the second message. The reason may be matching the first environment information, and the like.

In a possible implementation, the access network device may set priorities of different model obtaining manners. For example, a priority for obtaining, by the terminal, an AI model from an access network device is the highest, a priority for obtaining, by the terminal, an AI model from a core network element is the second, and a priority for obtaining, by the terminal, an AI model from an OTT server is the second. For example, when the access network device determines that the access network device cannot transmit the first AI model to the terminal when the delay condition is met, the access network device may instruct, by using the fourth indication information in the second message, the terminal to obtain the first AI model from another node other than the access network device. For example, the access network device instructs the terminal to obtain the first AI model from a core network network element or an OTT server with a second priority. Optionally, the access network device indicates, by using a second message, a reason why the terminal obtains the first AI model from another node. For example, the reason may be that the access network device cannot transmit the first AI model to the terminal in a condition that the delay is met because the air interface resource of the access network device is limited, a channel condition is limited, or the like. Therefore, the first AI model and the like are obtained by using another node. Further, in a process in which the terminal obtains the first model from the another node, that is, in a transmission process of the first AI model, the terminal may send an indication to the access network device, to indicate the transmission progress of the first AI model, and/or after the terminal completes obtaining the first AI model from the another node, In other words, after the transmission of the first AI model is complete, the terminal may send an indication to the access network device, to indicate that the transmission of the first AI model is complete.

For example, the first environment information corresponds to one or more AI models, and the one or more AI models include an AI model that has been stored inside the terminal. If the access network device determines that the performance of the AI model stored inside the terminal is relatively poor (for example, the generalization performance is relatively poor), the access network device may configure the terminal to obtain the AI model from another node. In the first AI model indicated by the access network device to the terminal, the AI model stored inside the terminal is not included.

Optionally, before step 510, it further includes:
Step 500: The terminal and the access network device perform pre-interaction.

The process of pre-interaction may be initiated by the terminal, or may be initiated by the access network device, which is not limited. Through the process of pre-interaction, the following information can be exchanged between the terminal and the access network device:
Each type of environment information includes the categories and content of the information, the correspondence between the environment information and the identifier, the storage capability of the terminal, the performance requirements of the AI model for the environment information of different types on the terminal, or the capability of the terminal to obtain the AI model.

For example, each type of environment information includes the categories and content of the information, as well as the correspondence between the environment information and the identifier. This information can be determined by the terminal. The terminal then reports the determined information to the access network device. The access network device may agree or refuse. If the access network device agrees, it stores the categories and content of the environment information included in each type, as well as the correspondence between the environment information and the identifier. After that, the access network device may instruct the terminal to report a certain type of environment information. The terminal then reports the corresponding type of environment information based on the above pre-configuration. Alternatively, the categories and content of the environment information included in each type, as well as the correspondence between the environment information and the identifier, can be determined by the access network device. The access network device then configures the determined information for the terminal. After that, the access network device may instruct the terminal to report a certain type of environment information, and the terminal reports the corresponding type of environment information based on the above configuration.

Regarding the storage capability of the terminal, the performance requirements of the AI model based on the terminal's information in different environments, and the terminal's capability to obtain the AI model, etc., these are reported by the terminal to the access network device. Taking the example of the terminal reporting its storage capability, in a possible implementation, the terminal reports a storage capability list to the access network device. The storage capability list includes storage capability information for one or more functions (functionality). It can be understood that one function corresponds to at least one AI model, and all of these at least one AI models can implement this function. The at least one AI model may be stored inside the terminal, or, a portion of the at least one AI model is stored inside the terminal, and the remaining portion of the AI models needs to be downloaded from other nodes, or, all of the at least one AI model need to be downloaded from other nodes. For a function, the storage capability information reported by the terminal includes at least one of the following: the size of the storage space used by the terminal to store all AI models corresponding to the function, the quantity of all AI models corresponding to the function that the terminal is used to store, the size of the storage space of the AI model corresponding to the function that the terminal has already stored, the quantity of the AI models corresponding to the function that the terminal has already stored, the size of the storage space of the AI model corresponding to the function that the terminal can still allocate for the function in the future, or the quantity of the AI models corresponding to the function that the terminal can still allocate for the function in the future, etc.

It can be understood that, in a scenario where the terminal reports the storage capability of the terminal to the access network device, when determining the first AI model, the access network device may consider the storage capability of the terminal. For example, the first environment information reported by the terminal corresponds to multiple AI models, and the access network device may select a part of the AI models from the multiple AI models based on the storage capability of the terminal. For example, the AI model whose storage space can meet the storage capability requirement of the terminal is selected.

In a possible implementation, a function is used as an example. The terminal has different environment information, and the performance requirements of the AI model include: performance requirements of the AI model in different environment information. For example, the performance requirements of the AI model include: a model that can be applied in corresponding environment information, a throughput rate, or another performance indicator. For example, when the AI model is used for prediction, the other performance indicators include: an accuracy rate of a prediction result of the AI model, a capability of providing a prediction result (for example, based on periodicity, a prediction result is provided), or a precision degree of the prediction result (for example, a minimum error of the prediction result). Optionally, the performance requirement information of the AI model by the terminal may be referred to as performance requirement information of the AI model, and the performance requirement information of the AI model may be determined by the access network device and configured by the access network device for the terminal, or may be determined by the terminal itself and reported by the terminal to the access network device, or may be determined by the access network device and the terminal through discussion. Therefore, the performance requirement information of the AI model may also be referred to as performance requirement information of the AI model by the access network device, or performance requirement information of the AI model by the terminal and the access network device, or the like.

It can be understood that, in a scenario where a terminal reports the capability of obtaining an AI model to an access network device, the access network device, when determining the first AI model, may consider the capability of the terminal to obtain the AI model under the first environment information reported by the terminal. For example, the first environment information corresponds to multiple AI models, and the terminal can select, from the multiple AI models, an AI model whose performance requirements meet the terminal's requirements.

In a possible implementation, the capability of obtaining an AI model by the terminal mainly refers to the capability of the terminal to obtain an AI model from various nodes. For example, the capability of obtaining an AI model may include the capability of obtaining an AI model from an access network device, a core network element, OAM, or an OTT server, etc.

It can be understood that, in a scenario where a terminal reports the capability of obtaining an AI model to an access network device, the access network device, when determining the first AI model, may consider the capability of the terminal to obtain the AI model. For example, the access network device may preferentially configure an AI model with a strong capability of obtaining the AI model for the terminal, and so on.

For example, the environment information includes the types and content of the environment information, the correspondence between the environment information and the identifier, the storage capability of the terminal, the performance requirements of the AI model for the terminal in different environment information, or the capability of the terminal to obtain the AI model. The terminal reports the above information to the access network device in one message, or in multiple messages.

Among them, the fifth indication information is used to indicate the type and content of the environment information reported by the terminal. The sixth indication information is used to indicate the correspondence between the environment information and the identifier. The seventh indication information is used to indicate the storage capability of the terminal. The eighth indication information is used to indicate the performance requirements of the AI model for the terminal in different environment information. The ninth indication information is used to indicate the capability of the terminal to obtain the AI model.

For example, the terminal is located on an urban road, the terminal switches from a high speed to a low speed, and the terminal reports, to the access network device, environment information related to the low-speed environment. Based on the environment information reported by the terminal, the access network device may determine the first AI model, and indicate the first AI model to the terminal. When requesting the first AI model from another node, the terminal may indicate the reason for the request to the another node. For example, in the foregoing example, the reason why the terminal requests the first AI model is as follows: The terminal switches from a high speed to a low speed, and therefore needs to adapt to an AI model in a low-speed scenario.

Through the above design, the terminal reports the first environment information of the terminal to the access network device. Based on the first environment information, the access network device determines the first AI model that matches the first environment information, and indicates the first AI model to the terminal. The terminal uses the first AI model that matches the current environment to perform model inference, implement a corresponding function, and avoid a problem that inference performance of the terminal deteriorates due to a mismatch between the environment and the AI model. This improves AI-based UC performance.

The embodiments of this application further provide a communication method and apparatus. Different from the foregoing method, the network device sends, to the terminal, second environment information that can be obtained by the network device. The terminal determines, based on the second environment information, a second AI model that matches an environment of the terminal. In this way, the terminal can use an AI model that matches a current environment to perform model inference, implement a corresponding function, and improve AI-based UC performance.

For example, the network device is an access network device. As shown in FIG. 6, a procedure of a communication method is provided, including:
Step 610: The access network device sends a fifth message to the terminal, and the terminal receives the fifth message from the access network device.

For example, the fifth message includes tenth indication information, and the tenth indication information is used to indicate the second environment information of the access network device. The second environment information is any environment information that can be obtained by the access network device and that has an impact on configuration of the AI model of the terminal. The type and content of the environment information included in the second environment information are not limited. For example, a type of second environment information includes: weighting information of a transmit beam of the access network device, antenna downtilt angle information of the access network device, and channel environment information of the access network device (for example, the access network device is located indoors or outdoors).

In a possible implementation, the access network device and the terminal may determine one or more types of environment information through discussion in a manner such as pre-interaction, and different types of environment information include different types and/or content of environment information. Further, the access network device and the terminal may further determine correspondences between different types of environment information and identifiers in a manner such as pre-interaction. For example, the access network device selects one type of environment information from the determined one or more types of environment information. Environment detection is performed according to the type and content included in the type of environment information, to generate the second environment information, and the like. It may be understood that the fifth message further includes indication information of a type corresponding to the second environment information. The access network device determines, based on stored correspondences between different types of environment information and identifiers, an identifier of a type corresponding to the second environment information, and notifies the terminal of the identifier, for example, notifies the terminal of the identifier by adding the identifier to the fifth message.

It may be understood that the access network device may send the second environment information to the terminal periodically or based on an event triggering manner or the like. Specifically, a manner in which the access network device reports the second environment information may be preset, determined by the access network device, determined by the access network device through negotiation with the terminal in a pre-interaction manner, or the like. The second environment information reported by the access network device may be environment information that can be obtained by the access network device in real time. For example, when a period expires or a condition such as an event trigger condition is met, the access network device collects environment information in real time, generates second environment information, and the like. Alternatively, the access network device may report the environment information within a period of time, and the environment information within the period of time is referred to as the second environment information.

Optionally, the second environment information has a valid time. For example, the valid time may refer to a valid start time and a valid duration of the second environment information, or refer to a valid end time of the second environment information. Alternatively, before the terminal receives the environment information newly notified by the access network device, the second environment information is valid. Further, the access network device may notify the terminal of the valid time of the second environment information. For example, the fifth message carries indication information of the valid time.

Step 620: The terminal determines a second AI model based on the second environment information.

In a possible implementation, the terminal may determine, through detection, a correspondence between the environment information and the AI model. Different from the procedure in FIG. 5 in the foregoing, in FIG. 6, the environment information refers to environment information that can be obtained by the access network device and that has an impact on configuration of the terminal AI model. For example, the access network device performs detection in an environment to obtain corresponding environment information. The access network device sends the environment information to the terminal. For a plurality of AI models that implement a same function, the terminal uses the environment information as input, and inputs the environment information to the plurality of AI models respectively; obtains a plurality of output results based on the outputs of the plurality of AI models; and separately measures a difference between each of the plurality of output results and an ideal target result, to obtain a plurality of measurement results. Based on the plurality of measurement results, the correspondence between the environment information and the AI model is determined.

It may be understood that, in the correspondence between environment information and an AI model, one piece of environment information may be corresponding to one AI model, or one piece of environment information may be corresponding to a plurality of AI models. In a possible implementation, the terminal may determine, based on a correspondence between environment information and an AI model, a model corresponding to the second environment information. The model is referred to as a second AI model. The second AI model includes one or more AI models. In another possible implementation, in addition to considering impact of the factor of the second environment information, the terminal further considers another factor, and determines the second AI model. For example, the terminal further considers at least one of environment information detected by the terminal, a model storage capability of the terminal, a capability of the terminal to obtain an AI model, or a performance requirement for the AI model. The terminal determines, from the plurality of AI models corresponding to the second environment information, an AI model that meets the foregoing condition. The AI model is referred to as the second AI model.

In a possible implementation, step 620 may be replaced with: The terminal determines the second AI model based on the detected third environment information. For example, the terminal may detect the environment, and generate the third environment information. The terminal determines, based on the correspondence between the environment information and the AI model, the AI model corresponding to the third environment information. The AI model is referred to as the second AI model. Further, when determining the second AI model, the terminal may further consider another factor, for example, an AI model storage capability of the terminal, a capability of the terminal to obtain the AI model, or a performance requirement for the AI model. Alternatively, the terminal may obtain a correspondence between an environment and an AI model. For example, an environment 1 (a high-speed outdoor) corresponds to an AI model X, and an environment 2 (a low-speed indoor) corresponds to an AI model Y. The terminal may determine, based on the detected third environment information, an environment in which the terminal is located. determining the second AI model according to the correspondence between the environment and the AI model, and the like. It may be understood that the correspondence between the environment and the AI model may be determined by the terminal, configured by the access network device for the terminal, or predefined by the access network device. Optionally, in a possible implementation, the access network device may send indication information to the terminal, where the indication information is used to indicate that the terminal can directly enable a corresponding AI model based on the detected environment information.

After determining the second AI model, the terminal may directly use the second AI model to perform inference, to implement a corresponding function. Alternatively, the terminal reports the second AI model to the access network device, and performs a corresponding operation after receiving an indication from the access network device. In this case, optionally, the procedure in FIG. 6 further includes:
Step 630: The terminal sends a sixth message to the access network device, and the access network device receives the sixth message from the terminal.

The sixth message includes eleventh indication information, and the eleventh indication information is used to indicate the second AI model or perform a function of the second AI model. In a possible implementation, the sixth message includes the AI model list, and the AI model list includes one or more AI models. In this embodiment of this application, the AI model included in the AI model list is referred to as the second AI model.

For example, when receiving the sixth message, the access network device determines the second AI model based on the eleventh indication information included in the sixth message. When the access network device determines that the second AI model does not match the environment information of the terminal, the access network device may send indication information to the terminal, to instruct the terminal to switch the AI model. Optionally, the access network device further indicates, to the terminal, a reason for switching the AI model. For example, the reason is that an environment of the terminal does not match the second AI model. Further, the access network device may further indicate a mismatch cause to the terminal. For example, the mismatch cause is that the second AI model requested by the terminal is applicable to an outdoor channel environment, and the access network device determines that the terminal is actually in an indoor channel environment. Further, the access network device may further send, to the terminal, an AI model (which may be referred to as a third AI model) that the access network device considers to be more suitable for the terminal, or the access network device recommends a better AI model (which may be referred to as a third AI model) to the terminal, but finally determines whether to use the AI model to implement a corresponding function. Decisions are made by the terminal.

In a possible implementation, the terminal may determine the first condition for starting the second AI model and/or the first manner in which the terminal obtains the second AI model. For example, the terminal determines the first condition for starting the second AI model and/or the first manner in which the terminal obtains the second AI model based on at least one of the following: the second environment information indicated by the access network device, the environment information detected by the terminal, the performance requirement for the AI model, the model storage capability of the terminal, or the capability of the terminal to obtain the AI model.

Optionally, the terminal may further report, to the access network device, the first condition for starting the second AI model and/or the first manner in which the terminal obtains the second AI model. For example, the terminal determines, based on at least one of the following: the second environment information indicated by the access network device, the environment information detected by the terminal, the performance requirement for the AI model, the model storage capability of the terminal, or the capability of the terminal to obtain the AI model, the first condition for starting the second AI model and/or the first manner in which the terminal obtains the second AI model.

For example, when receiving the sixth message, the access network device obtains the twelfth indication information and/or the thirteenth indication information from the sixth message. The access network device determines, based on the twelfth indication information and/or the thirteenth indication information, the first condition for starting the second model by the terminal and/or the first manner for obtaining the second AI model by the terminal. The access network device may determine whether the first condition for the terminal to start the second AI model and/or the first manner for obtaining the second AI model are/is proper. If not, the access network device may recommend or recommend a better starting condition and/or a manner of obtaining the second AI model to the terminal (which may be referred to as a second condition and/or a second manner, respectively).

Step 640: The access network device sends a seventh message to the terminal, and the terminal receives the seventh message from the access network device.

For example, the seventh message includes at least one of the following: fourteenth indication information, fifteenth indication information, or sixteenth indication information. The fourteenth indication information is used to indicate a third AI model or a function for executing the third AI model, and the third AI model and the second AI model implement a same function. The third AI model may include one or more AI models. For example, the fourteenth indication information is used to indicate an AI model list, the AI model list includes one or more AI models, and the AI model included in the AI model list is referred to as the third AI model. It may be understood that the third AI model is an AI model recommended or recommended by the access network device to the terminal. Optionally, whether the terminal uses the third AI model to implement the corresponding function may be determined by the terminal. In other words, the terminal may accept or reject the model or the like recommended by the access network device, which is not limited. In a possible implementation, if the terminal accepts the third AI model recommended by the access network device, when the third AI model includes a plurality of AI models, the terminal further selects an AI model from the plurality of AI models, to implement a corresponding function.

The fifteenth indication information is used to indicate a second manner in which the terminal obtains the second AI model. It can be understood that the second manner is a manner in which the second AI model is obtained, recommended, or suggested by the access network device to the terminal. Similarly, the terminal may accept or reject the manner recommended by the access network device, without any limitation. The sixteenth indication information is used to indicate a second condition for the terminal to start the second AI model. It can be understood that the second condition is a condition for starting the second AI model, recommended, or suggested by the access network device to the terminal. Similarly, the terminal may accept or reject the condition established by the access network device, without any limitation.

For example, the manner in which the terminal obtains the second AI model includes the terminal obtaining the second AI model from the access network device. The access network device may use a corresponding transmission manner to transmit the second AI model to the terminal. For example, the access network device may transmit the second AI model to the terminal based on air interface resources. Alternatively, when the RRC air interface resources are limited, but the terminal requests to transmit the second AI model through the CP, in this case, the second AI model may be transmitted to the terminal through the UP. In this case, the access network device may further indicate to the terminal that the reason for switching the transmission manner is that the RRC air interface resources are limited.

Optionally, before step 610, the method further includes:
Step 600: A terminal pre-interacts with an access network device.

The pre-interaction process may be actively initiated by the terminal, or actively initiated by the access network device, which is not limited. For specific information about interaction between the terminal and the access network device, refer to the description in step 500. A difference lies in that the access network device may indicate, to the terminal, capability information that is of the AI model and that can be provided by the access network device, for example, for a function, an identifier (or index) of an AI model that can be provided by the access network device under different environment information, and a transmission manner supported when the access network device transmits the AI model to the terminal (for example, a transmission rate, a transmission duration, and a size of a transmitted AI model supported by the access network device)

In a possible implementation, the access network device sends the eighth message to the terminal, and the terminal receives the eighth message from the access network device. The eighth message includes at least one of the following: seventeenth indication information, eighteenth indication information, nineteenth indication information, or twentieth indication information, and the seventeenth indication information is used to indicate an identifier (or an index) of an AI model that can be provided by the access network device in different environment information. the eighteenth indication information is used to indicate a transmission mode supported when the access network device transmits the AI model to the terminal, the nineteenth indication information is used to indicate a type and content comprised in the environment information, and the twentieth indication information is used to indicate a mapping relationship between the environment information and an identifier.

According to the foregoing design, the access network device provides the terminal with the environment information that can be obtained by the access network device, and the terminal determines, based on comprehensive decisions such as the environment information provided by the access network device and the environment information that can be obtained by the terminal, the second AI model matching the terminal environment. This prevents inference performance deterioration caused by mismatch between the terminal environment and the AI model, and improves AI-based UC performance.

It may be understood that, in the description of this embodiment of this application,
1. In addition to the differences between different processes, the description of different processes can be referenced by each other.
2. In each process, the sequence of different steps is not limited. In addition, each process may include fewer or more steps than the flowchart or text description.
3. In the procedures in FIG. 5 and FIG. 6, an example in which a terminal and an access network device are performed is used for description. It may be understood that, in each procedure, a function of the terminal may be implemented by the terminal, or implemented by a module (for example, a chip or a circuit) in the terminal. A function of the access network device may be implemented by the access network device, or may be implemented by a module (for example, a chip or a circuit) in the access network device, or may be implemented by a logical node (for example, a logical node) that can completely or partially implement the functions of the access network device. CU, DU, or the like), logic module, or software.
4. In the embodiments of this application, "receiving, by (for example, a terminal), information from (for example, an access network device)") may be understood as that the source end of the information is the access network device, and the destination end is the terminal. The information may include information that the terminal directly or indirectly receives from the access network device. The information may be processed as necessary between the source end and the destination end of the information, for example, in a format change. However, the destination end can understand valid information from the source end. Similar expressions in this application can be understood in a similar manner, and details are not described herein again.

In the embodiments provided in this application, the method provided in the embodiments of this application is described from the perspective of the terminal and the access network device, respectively. In order to implement the functions in the method provided in the embodiments of this application, the terminal, the access network device, or the like, may include a hardware structure and/or a software module, to implement the foregoing functions in the form of a hardware structure, a software module, or a hardware structure plus a software module. Whether a specific function in the foregoing functions is performed by using a hardware structure, a software module, or a hardware structure plus a software module, depends on design constraints of a particular application of the technical solution.

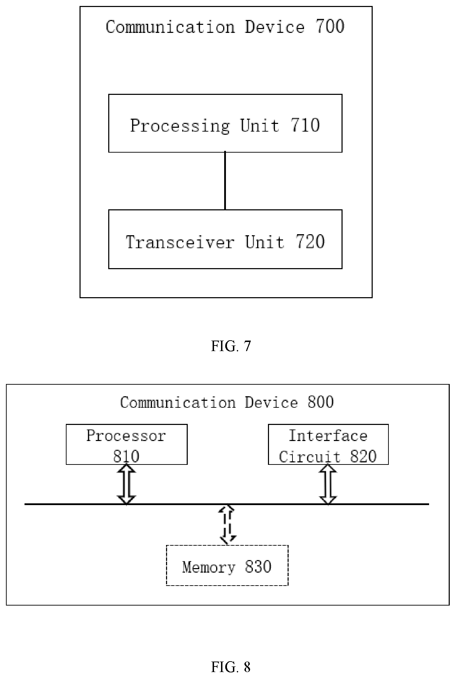

FIG. 7 and FIG. 8 are schematic structural diagramsof possible communication apparatuses provided in embodiments of this application. These communication apparatuses can implement one or more corresponding functions of the method embodiments described above. For example, the functions implemented by a terminal or a network device, and therefore, the beneficial effects of the method embodiments described above may be achieved. In embodiments of this application, the communication apparatus may be a terminal or a network device. The network device may be an access network device, or a core network element, or an OAM, or another AI node, or the like. Alternatively, the communication apparatus may be a module (such as a chip) applied in a terminal or a network device.

As shown in FIG. 7, the communication apparatus700 includes a processing unit 710 and a transceiver unit 720. The communication apparatus 700 is configured to implement the functions of the terminal or the access network device in the method embodiments shown inFIG. 5 or FIG. 6.

Optionally, the transceiver unit 720 may also be referred to as an output unit, an interface unit, or a communication unit. In a possible implementation, the transceiver unit 720 includes at least one of a sending unit or a receiving unit. The sending unit and the receiving unit may be integrated together, or may be two independent units, or the like.

When the communications apparatus 700 is configured to implement the functions of the terminal in FIG. 5, specifically: the processing unit 710 is configured to generate a first message; the transceiver unit 720 is configured to send the first message to a network device, where the first message includes first indication information, and the first indication information is used to indicate the first environment information of the terminal; the transceiver unit 720 is further configured to receive a second message from the network device, where the second message includes second indication information, and the second indication information is used to indicate the first AI model corresponding to the first environment information.

In a possible design, when sending the first message to the network device, the transceiver unit 720 is specifically configured to: receive a third message from the network device, where the third message includes first configuration information, and the first configuration information is used to configure the terminal to report environment information to the network device; based on the first configuration information, send the first message to the network device.

In a possible design, the second message further includes third indication information and/or fourth indication information. The third indication information is used to indicate a condition for enabling the first AI model. The fourth indication information is used to indicate a manner of obtaining the first AI model.

In a possible design, before the sending a first message to a network device, the transceiver unit 720 is further configured to: send a fourth message to the network device, wherein the fourth message includes at least one of the following: fifth indication information, sixth indication information, seventh indication information, eighth indication information, or ninth indication information. The fifth indication information is used to indicate a type and content of environment information reported by the terminal. The sixth indication information is used to indicate a correspondence between the environment information and the identifier. The seventh indication information is used to indicate a storage capability of the terminal. The eighth indication information is used to indicate a requirement of the terminal for performance of the AI model in different environment information. The ninth indication information is used to indicate a capability of the terminal to obtain the AI model.

When the communications apparatus 700 is configured to implement the functions of the access network device in FIG. 5, specifically: the transceiver unit 720 is configured to receive a first message from a terminal, where the first message includes first indication information, and the first indication information is used to indicate the first environment information of the terminal; the processing unit 710 is configured to determine a first artificial intelligence AI model based on the first environment information; the transceiver unit 720 is further configured to send a second message to the terminal, where the second message includes second indication information, and the second indication information is used to indicate the first AI model.

In a possible design, the transceiver unit 720 is further configured to send a third message to the terminal, where the third message includes first configuration information, and the first configuration information is used to configure the terminal to report environment information to the network device.

In a possible design, the second message further includes third indication information and/or fourth indication information, where the third indication information is used to indicate a condition for enabling the first AI model, and the fourth indication information is used to indicate an obtaining manner of the first AI model.

In a possible design, before receiving a first message from a terminal, the transceiver unit 720 is further configured to receive a fourth message from the terminal. The fourth message includes at least one of the following: fifth indication information, sixth indication information, seventh indication information, eighth indication information, or ninth indication information. The fifth indication information is used to indicate the type and content of environment information reported by the terminal. The sixth indication information is used to indicate the correspondence between the environment information and an identifier. The seventh indication information is used to indicate the storage capability of the terminal. The eighth indication information is used to indicate the performance requirement of an AI model for the terminal in different environment information. The ninth indication information is used to indicate the capability of the terminal to obtain an AI model.

When the communications apparatus 700 is configured to implement the functions of the terminal in FIG. 6, specifically: the transceiver unit 720 is configured to receive a fifth message from a network device. The fifth message includes tenth indication information, and the tenth indication information is used to indicate second environment information of the network device. The processing unit 710 is configured to determine a second artificial intelligence AI model based on the second environment information.

In a possible design, after the second AI model is determined, the transceiver unit 720 is further configured to send a sixth message to the network device. The sixth message includes eleventh indication information, and the eleventh indication information is used to indicate the second AI model.

In a possible design, the sixth message further includes: twelfth indication information and/or thirteenth indication information. The twelfth indication information is used to indicate a first condition for the terminal to start the second AI model. The thirteenth indication information is used to indicate a first manner in which the terminal obtains the second AI model.

In a possible design, the transceiver unit 720 is further configured to receive a seventh message from the network device. The seventh message includes at least one of the following: fourteenth indication information, fifteenth indication information, or sixteenth indication information. The fourteenth indication information is used to indicate a third AI model, where the third AI model and the second AI model implement the same function. The fifteenth indication information is used to indicate a second manner in which the terminal obtains the second AI model. The sixteenth indication information is used to indicate a second condition for the terminal to start the second AI model.

In a possible design, the transceiver unit 720 is further configured to receive an eighth message from the network device. The eighth message includes at least one of the following: seventeenth indication information, eighteenth indication information, nineteenth indication information, or twentieth indication information. The seventeenth indication information is used to indicate an identifier of an AI model that can be provided by the network device under different environment information. The eighteenth indication information is used to indicate a transmission manner supported when the network device transmits an AI model to the terminal. The nineteenth indication information is used to indicate the types and content included in the environment information. The twentieth indication information is used to indicate the mapping relationship between the environment information and the identifier.

When the communications apparatus 700 is configured to implement the function of the access network device in FIG. 6, the processing unit 710 is configured to obtain second environment information of the network device. The transceiver unit 720 is configured to send a fifth message to the terminal, where the fifth message includes tenth indication information, and the tenth indication information is used to indicate the second environment information.

In a possible design, the transceiver unit 720 is further configured to receive a sixth message from the terminal, where the sixth message includes eleventh indication information, the eleventh indication information is used to indicate a second artificial intelligence AI model, and the second AI model is determined based on the second environment information.

In a possible design, the sixth message further includes twelfth indication information and/or thirteenth indication information, where the twelfth indication information is used to indicate a first condition for the terminal to start the second AI model, and the thirteenth indication information is used to indicate a first manner in which the terminal obtains the second AI model.

In a possible design, the transceiver unit 720 is further configured to send a seventh message to the terminal, where the seventh message includes at least one of the following: fourteenth indication information, fifteenth indication information, or sixteenth indication information, and the fourteenth indication information is used to indicate a third AI model. the third AI model and the second AI model implement a same function, the fifteenth indication information is used to indicate a second manner in which the terminal obtains the second AI model, and the sixteenth indication information is used to indicate a second condition in which the terminal starts the second AI model.

In a possible design, the transceiver unit 720 is further configured to send an eighth message to the terminal, where the eighth message includes at least one of the following: seventeenth indication information, eighteenth indication information, nineteenth indication information, or twentieth indication information. the seventeenth indication information is used to indicate an identifier of an AI model that can be provided by the network device under different environment information, the eighteenth indication information is used to indicate a transmission manner supported when the network device transmits the AI model to the terminal, and the nineteenth indication information is used to indicate a type and content comprised in the environment information; and the twentieth indication information is used to indicate a mapping relationship between the environment information and an identifier.

For more detailed description about the processing unit 710 and the transceiver unit 720, refer to the description in FIG. 5 or FIG. 6 in the foregoing method embodiment. Details are not described herein again.

In a possible implementation, when the access network device uses an O-RAN architecture, the processing unit 710 may be located on an O-CU entity, and the transceiver unit 720 may be located on an O-DU or an O-RU entity. Optionally, when the O-CU entity includes the O-CU-CP entity, the processing unit 710 may be located on the O-CU-CP entity. Alternatively, the processing unit 710 is located on the O-DU entity, and the transceiver unit 720 is located on the O-RU entity. Alternatively, the processing unit 710 and the transceiver unit 720 are both located on the O-DU entity, the O-RU entity, or the like. This is not limited.

It can be understood that, in the embodiments of this application, the division of units is illustrative and is merely a logical function division. In actual implementation, there may be another division manner. In addition, the functional units in the embodiments of this application may be integrated into one physical device (for example, a processor), or each functional unit may be a separate physical device. Alternatively, two or more units may be integrated into one unit for implementation. The foregoing integrated unit may be implemented in a form of hardware, or in a form of software function modules, or the like.

As shown in FIG. 8, the communications apparatus 800 includes a processor 810 and an interface circuit 820. The processor 810 and the interface circuit 820 are mutually coupled. It can be understood that, the interface circuit 820 may be a transceiver or an input/output interface. Optionally, the communications apparatus 800 may further include a memory 830, configured to store instructions executed by the processor 810, or store input data required for the processor 810 to run the instructions, or store data generated after the processor 810 runs the instructions.

When the communications apparatus 800 is configured to implement the method shown in FIG. 5 or FIG. 6, the processor 810 is configured to implement the functions of the processing unit 710, and the interface circuit 820 is configured to implement the functions of the transceiver unit 720.

When the aforementioned communications apparatus is a chip applied to a terminal, the chip implements the functions of the terminal in the method embodiment. The chip receives, from another module (such as a radio frequency module or an antenna) in the terminal, information sent by the access network device to the terminal; or the chip sends information to another module (such as a radio frequency module or an antenna) in the terminal, where the information is sent by the terminal to the access network device.

When the aforementioned communications apparatus is a module applied to an access network device, the module implements the functions of the access network device in the method embodiment. The module receives information from another module (such as a radio frequency module or an antenna) in the access network device, where the information is sent by the terminal to the access network device; or the module sends information to another module (such as a radio frequency module or an antenna) in the access network device, where the information is sent by the access network device to the terminal.

It can be understood that, in the embodiments of this application, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor, or may be any conventional processor.

The memory in the embodiments of this application may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art.

The method steps in the embodiments of this application can be implemented in hardware, or can be implemented in software instructions that can be executed by a processor. The software instructions may consist of corresponding software modules, which may be stored in random access memory, flash memory, read-only memory, programmable read-only memory, erasable programmable read-only memory, electrically erasable programmable read-only memory, registers, hard disks, removable hard disks, CD-ROMs, or any other form of storage medium well known in the art. An example of a storage medium is coupled to the processor, so that the processor can read information from the storage medium and write information into the storage medium. The storage medium may also be a component of the processor. The processor and the storage medium may be located in an ASIC.

This embodiment of this application further provides a communications apparatus. The communications apparatus includes a processor and a memory. The processor and the memory are coupled. The processor is configured to implement the functions of the access network device or the terminal in FIG. 5 or FIG. 6.

This embodiment of this application further provides a communications apparatus, including a processor. The processor is configured to implement functions of the access network device or the terminal in FIG. 5 or FIG. 6.

This embodiment of this application further provides a computer-readable storage medium. The computer-readable storage medium stores instructions, and the instructions may also be referred to as a computer program, computer program code, or the like. The instructions are run on a computer, so that the computer performs functions of the access network device or the terminal in the method embodiment in FIG. 5 or FIG. 6.

This embodiment of this application further provides a computer program product, including a computer program or instructions. When the computer program or instructions are run on a computer, functions of the access network device or the terminal in the method in FIG. 5 or FIG. 6 are implemented.

This embodiment of this application further provides a chip. The chip includes a processor, the processor is coupled to a memory, and the processor is configured to execute the computer program or instructions stored in the memory, so that functions of the access network device or the terminal in FIG. 5 or FIG. 6 are implemented.

This embodiment of this application further provides a communications system, including a first communications apparatus and a second communications apparatus. The first communications apparatus and the second communications apparatus may be respectively configured to implement functions of the access network device and the terminal in FIG. 5, or the first communications apparatus and the second communications apparatus are respectively configured to implement functions of the access network device and the terminal in FIG. 6.

All or some of the foregoing embodiments may be implemented by using software, hardware, firmware, or any combination thereof. When implemented by using software, all or some of the applications may be implemented in a form of a computer program product. The computer program product includes one or more computer programs or instructions. When the computer program or instruction is loaded and executed on a computer, all or some of the procedures or functions described in the embodiments of this application are performed. The computer may be a general-purpose computer, a dedicated computer, a computer network, a network device, user equipment, or another programmable apparatus. The computer program or instruction may be stored in a computer readable storage medium, or transmitted from one computer readable storage medium to another computer readable storage medium. For example, the computer program or instruction may be transmitted from one website site, computer, server, or data center to another website site, computer, server, or data center, in a wired or wireless manner. The computer readable storage medium may be any usable medium accessible by a computer, or a data storage device such as a server or a data center that integrates one or more usable media. The usable medium may be a magnetic medium, for example, a floppy disk, a hard disk, or a magnetic tape. It may also be an optical medium, for example, a digital video disc; It may also be a semiconductor medium, for example, a solid state disk. The computer-readable storage medium may be a volatile or non-volatile storage medium, or may include two types of storage mediums: volatile and non-volatile.

In various embodiments of this application, unless otherwise specified or there is a logical conflict, the terms and/or descriptions between different embodiments are consistent and may be mutually referenced. The technical features in different embodiments may be combined to form a new embodiment based on their inherent logical relationships.

## Claims

1. A communication method, comprising:
sending a first message to a network device, wherein the first message comprises first indication information, and the first indication information is used to indicate first environment information of a terminal;
receiving a second message from the network device, wherein the second message comprises second indication information, and the second indication information is used to indicate a first artificial intelligence AI model corresponding to the first environment information or a function of executing the first AI model.

2. The method according to claim 1, wherein the sending a first message to a network device comprises:
receiving a third message from the network device, wherein the third message includes first configuration information, and the first configuration information is used to configure the terminal to report environment information to the network device;
based on the first configuration information, sending the first message to the network device.

3. The method according to claim 1 or 2, wherein the second message further includes third indication information and/or fourth indication information, wherein the third indication information is used to indicate a condition for enabling the first AI model, and the fourth indication information is used to indicate a manner of obtaining the first AI model.

4. The method according to any one of claims 1 to 3, wherein before the sending a first message to a network device, the method further comprises:
sending a fourth message to the network device, wherein the fourth message includes at least one of the following:
fifth indication information, sixth indication information, seventh indication information, eighth indication information, or ninth indication information; the fifth indication information is used to indicate the type and content of environment information reported by the terminal; the sixth indication information is used to indicate the correspondence between the environment information and an identifier; the seventh indication information is used to indicate the storage capability of the terminal; the eighth indication information is used to indicate the performance requirement of an AI model for the terminal in different environment information; the ninth indication information is used to indicate the capability of the terminal to obtain an AI model.

5. A communication method, comprising:
receiving a first message from a terminal, wherein the first message comprises first indication information, and the first indication information is used to indicate first environment information of the terminal.
based on the first environment information, determining the first artificial intelligence AI model;
sending a second message to the terminal, wherein the second message comprises second indication information, and the second indication information is used to indicate the first AI model or a function of executing the first AI model.

6. The method according to claim 5, further comprising:
sending a third message to the terminal, wherein the third message comprises first configuration information, and the first configuration information is used to configure the terminal to report environment information to the network device.

7. The method according to claim 5 or 6, wherein the second message further comprises third indication information and/or fourth indication information, wherein the third indication information is used to indicate a condition for enabling the first AI model, and the fourth indication information is used to indicate a manner of obtaining the first AI model by the terminal.

8. The method according to any one of claims 5 to 7, wherein before the receiving a first message from a terminal, the method further comprises:
receiving a fourth message from the terminal, wherein the fourth message comprises at least one of the following: fifth indication information, sixth indication information, seventh indication information, eighth indication information, or ninth indication information, wherein the fifth indication information is used to indicate a type and content of environment information reported by the terminal; the sixth indication information is used to indicate a correspondence between the environment information and an identifier; the seventh indication information is used to indicate a storage capability of the terminal; the eighth indication information is used to indicate a requirement of the AI model for performance of the terminal in different environment information; and the ninth indication information is used to indicate a capability of the terminal to obtain the AI model.

9. A communication method, comprising:
receiving a fifth message from a network device, wherein the fifth message comprises tenth indication information, and the tenth indication information is used to indicate second environment information of the network device;
based on the second environment information, determining the second artificial intelligence AI model.

10. The method according to claim 9, after determining the second AI model, the method further comprises:
sending a sixth message to the network device, wherein the sixth message comprises eleventh indication information, and the eleventh indication information is used to indicate the second AI model or to perform a function of the second AI model.

11. The method according to claim 10, wherein the sixth message further comprises: twelfth indication information and/or thirteenth indication information, wherein the twelfth indication information is used to indicate a first condition for the terminal to start the second AI model, and the thirteenth indication information is used to indicate a first manner in which the terminal obtains the second AI model.

12. The method according to claim 10 or 11, wherein the method further comprises:
receiving a seventh message from the network device, wherein the seventh message comprises at least one of the following: fourteenth indication information, fifteenth indication information, or sixteenth indication information; the fourteenth indication information is used to indicate a third AI model or a function of executing the third AI model; the third AI model and the second AI model implement the same function; the fifteenth indication information is used to indicate a second manner in which the terminal obtains the second AI model; the sixteenth indication information is used to indicate a second condition for the terminal to start the second AI model.

13. The method according to any one of claims 9 to 12, wherein the method further comprises:
receiving an eighth message from the network device, wherein the eighth message comprises at least one of the following: seventeenth indication information, eighteenth indication information, nineteenth indication information, or twentieth indication information; the seventeenth indication information is used to indicate an identifier of an AI model that can be provided by the network device under different environment information; the eighteenth indication information is used to indicate a transmission manner supported when the network device transmits the AI model to the terminal; the nineteenth indication information is used to indicate a type and content of the environment information; the twentieth indication information is used to indicate a mapping relationship between the environment information and the identifier.

14. A communication method, comprising:
obtaining second environment information of a network device;
sending a fifth message to a terminal, wherein the fifth message comprises tenth indication information, and the tenth indication information is used to indicate the second environment information.

15. The method according to claim 14, further comprising:
receiving a sixth message from the terminal, wherein the sixth message comprises eleventh indication information, the eleventh indication information is used to indicate a second AI model or perform a function of the second AI model, and the second AI model is determined based on the second environment information.

16. The method according to claim 15, wherein the sixth message further comprises twelfth indication information and/or thirteenth indication information, and the twelfth indication information is used to indicate a first condition for the terminal to start the second AI model; and the thirteenth indication information is used to indicate a first manner in which the terminal obtains the second AI model.

17. The method according to claim 15 or 16, further comprising:
sending a seventh message to the terminal, wherein the seventh message comprises at least one of the following: fourteenth indication information, fifteenth indication information, or sixteenth indication information, the fourteenth indication information is used to indicate a third AI model or perform a function of the third AI model, and the third AI model and the second AI model implement a same function; and the fifteenth indication information is used to indicate a second manner in which the terminal obtains the second AI model, and the sixteenth indication information is used to indicate a second condition in which the terminal starts the second AI model.

18. The method according to any one of claims 14 to 17, further comprising:
sending an eighth message to the terminal, wherein the eighth message comprises at least one of the following: seventeenth indication information, eighteenth indication information, nineteenth indication information, or twentieth indication information; the seventeenth indication information is used to indicate an identifier of an AI model that the network device can provide under different environment information; the eighteenth indication information is used to indicate a transmission manner supported when the network device transmits the AI model to the terminal; the nineteenth indication information is used to indicate a type and content of the environment information; the twentieth indication information is used to indicate a mapping relationship between the environment information and the identifier.

19. A communication apparatus, comprising a unit configured to implement the method according to any one of claims 1 to 4, or a unit configured to implement the method according to any one of claims 9 to 13.

20. A communication apparatus, comprising a processor and a memory, wherein the processor and the memory are coupled, and the processor is configured to implement the method according to any one of claims 1 to 4, or the method according to any one of claims 9 to 13.

21. A communication apparatus, comprising a processor and an interface circuit, wherein the interface circuit is configured to receive a signal from another apparatus outside the apparatus and transmit the signal to the processor, or send a signal from the processor to another apparatus outside the apparatus. The processor is configured to implement the method according to any one of claims 1 to 4 by using a logic circuit or executing code instructions, or the method according to any one of claims 9 to 13.

22. A communication apparatus, comprising a unit configured to implement the method according to any one of claims 5 to 8, or the method according to any one of claims 14 to 18.

23. A communication apparatus, comprising a processor and a memory, wherein the processor and the memory are coupled, and the processor is configured to implement the method according to any one of claims 5 to 8 by using a logic circuit or executing code instructions, or the method according to any one of claims 14 to 18.

24. An apparatus, comprising a processor and an interface circuit, wherein the interface circuit is configured to receive a signal from another apparatus other than the apparatus and transmit the signal to the processor, or send a signal from the processor to another apparatus other than the apparatus, wherein the processor is configured to implement the method according to any one of claims 5 to 8 or the method according to any one of claims 14 to 18 by using a logic circuit or executing a code instruction.

25. A computer readable storage medium, wherein the computer readable storage medium stores an instruction, and the instruction runs on computation, so that a computer performs the method according to any one of claims 1 to 4; or the method according to any one of claims 5 to 8, or the method according to any one of claims 9 to 13, or the method according to any one of claims 14 to 18.

26. A computer program product, comprising a computer program or an instruction, wherein when the computer program or the instruction is run by an apparatus, the method according to any one of claims 1 to 4 is performed, or the method according to any one of claims 5 to 8 is performed, wherein the method according to any one of claims 9 to 13 is performed, or the method according to any one of claims 14 to 18 is performed.

27. A chip, **characterized in that** it includes a processor, wherein the processor is coupled to a memory, and is configured to execute a computer program or instructions stored in the memory, so that the chip implements the method according to any one of claims 1 to 4, or implements the method according to any one of claims 5 to 8, or the method according to any one of claims 9 to 13, or the method according to any one of claims 14 to 18.

28. A communication system, comprising
a first communication apparatus, which is configured to perform the method according to any one of claims 1 to 4; the second communications apparatus is configured to perform the method according to any one of claims 5 to 8; or
the first communication apparatus,which is configured to perform the method according to any one of claims 9 to 13; the second communications apparatus is configured to perform the method according to any one of claims 14 to 18.
